# EUROPÄISCHE PATENTANMELDUNG

(11) **EP 2 153 887 A2**
(43) Veröffentlichungstag der Anmeldung: **17.02.2010**
(21) Anmeldenummer: 09008403.9
(22) Anmeldetag: 26.06.2009
(51) Int. Cl.: B01F 7/16, B01F 15/00, G08C 17/04, G08C 17/06, G08C 23/04

(54) **Rührvorrichtung mit berührungsloser Datenübertragung**

(30) Priorität: 13.08.2008 DE 102008038833
(71) Anmelder: Hans Heidolph GmbH & Co. KG, 93309 Kelheim (DE)
(72) Erfinder: Foltyn, Dr. Roman, 90607 Rückersdorf (DE); Beck, Markus, 92318 Neumarkt (DE); Lohmann, Walter, 90530 Wendelstein (DE); Melching, Achim, 91126 Schwabach (DE)
(74) Vertreter: Manitz, Finsterwald & Partner GbR

(57) **Zusammenfassung**

Die Erfindung betrifft einen Laborrührer, insbesondere einen Überkopfrührer, mit einem Rührwerk und mit einem von dem Rührwerk (2) rotierend antreibbaren, zum Eintauchen in ein zu rührendes Medium vorgesehenen Rührorgan (3), wobei das Rührorgan mit wenigstens einem Messsensor (10) zur Messung von Messdaten einer Messgröße des Mediums versehen ist. Das Rührorgan (3) ist mit einer Messschaltung (9) versehen, die eine Datenübertragungseinrichtung umfasst, um die Messdaten berührungslos an eine nicht mit dem Rührorgan rotierende Empfangseinheit (11) zu übertragen.

## Beschreibung

Die vorliegende Erfindung betrifft einen Laborrührer, insbesondere einen Überkopfrührer, mit einem Rührwerk und mit einem von dem Rührwerk rotierend antreibbaren, zum Eintauchen in ein zu rührendes Medium vorgesehenen Rührorgan.

Laborrührer mit einem Rührwerk werden in Laboratorien eingesetzt, um ein in einem Behälter befindliches Medium zu durchmischen. Beispielsweise wird in der chemischen Forschung ein Medium mittels eines an einer Rührwelle befindlichen Rührwerkzeugs gerührt, um eine gleichmäßige Stoffverteilung zu erzielen. Das zu rührende Medium kann insbesondere (partikelförmig) fest oder flüssig sein. Beispielsweise können feste Stoffe in Flüssigkeiten gelöst oder unterschiedliche Flüssigkeiten miteinander vermischt werden. Häufig wird hierzu ein sogenannter Überkopfrührer verwendet, bei dem das Rührwerk oberhalb des Behälters angeordnet ist und sich die Rührwelle mit dem Rührwerkzeug vertikal nach unten erstreckt.

Neben einer gleichmäßigen Stoffverteilung soll durch den Rührvorgang auch eine gleichmäßige Temperaturverteilung innerhalb des Mediums erzielt werden. Dies ist insbesondere dann von Bedeutung, wenn das Medium während des Rührens temperiert, beispielsweise geheizt wird. Hierbei wird die Temperatur des zu rührenden Mediums, insbesondere einer Flüssigkeit, während des Rührvorgangs gemessen. Dazu wird in der Regel ein Temperatursensor in das Medium eingetaucht, mit dem die Temperatur ermittelt wird.

Viele Misch- oder Rührvorgänge finden in geschlossenen Behältern statt. Die Rührwelle muss durch eine Durchführung in den geschlossenen Behälter bzw. das geschlossene Rührgefäß eingeführt werden. Der für die Temperaturmessung notwendige Temperatursensor wird durch eine zusätzliche Durchführung geführt. Dies führt zu erhöhten Kosten für die Behälter und erschwert die Handhabung.

Der Begriff "Rühren" im Sinne der Erfindung umfasst auch das Mischen, Homogenisieren, Suspendieren, Begasen und Umwälzen von Medien. Im Folgenden wird ohne Einschränkung lediglich von Rühren gesprochen.

Aufgabe der vorliegenden Erfindung ist es, die Nachteile der aus dem Stand der Technik bekannten Laborrührer zu vermeiden.

Gelöst wird die vorliegende Aufgabe durch einen Laborrührer mit den Merkmalen des Anspruchs 1, und insbesondere dadurch, dass das Rührorgan mit wenigstens einem Messsensor zur Messung von Messdaten einer Messgröße des Mediums versehen ist, wobei das Rührorgan mit einer Messschaltung versehen ist, die eine Datenübertragungseinrichtung umfasst, um die Messdaten berührungslos an eine nicht mit dem Rührorgan rotierende Empfangseinheit zu übertragen.

Der erfindungsgemäße Laborrührer weist den Vorteil auf, dass zur Messung der Messgröße des zu rührenden oder mischenden Mediums kein zusätzlicher oder separater Messsensor notwendig ist, da das Rührorgan bereits mit einem Messsensor versehen ist. Folglich muss keine separate Halterung für den Messsensor vorgesehen sein. Die Handhabung einer Laboreinrichtung, die den Laborrührer und einen Behälter mit dem zu rührenden oder mischenden Medium umfasst, wird vereinfacht, da kein zusätzlicher oder separater Sensor platziert werden muss. Darüber hinaus wird ausgeschlossen, dass der Sensor von einem Rührelement oder Rührwerkzeug des Rührorgans, beispielsweise einem oder mehreren Rührflügeln, beschädigt wird, oder dass der Sensor das Rührorgan behindert.

Wenn das Rühren oder Mischen des Mediums innerhalb eines geschlossenen Behälters oder Gefäßes stattfindet, muss der Behälter keine zusätzliche Durchführung aufweisen. Je weniger Durchführungen der Behälter aufweist, desto kostengünstiger kann der Behälter hergestellt werden und desto einfacher ist die Handhabung des Behälters während des Rührvorgangs einschließlich des Füllens und des Leerens des Behälters.

Der Messsensor kann in das Rührorgan integriert sein. Der Messsensor kann beispielsweise außen am Rührorgan angebracht oder innerhalb des Rührorgans angeordnet sein. Insbesondere wird der Messsensor von dem Rührorgan getragen. Beispielsweise kann es sich bei dem zu rührenden Medium um eine Flüssigkeit, aber auch um andere Medien wie hochviskose Medien, Gase, Gele oder pulverförmige Substanzen handeln.

Grundsätzlich kann die vorliegende Erfindung bei jedem beliebigen Rührer oder jeder beliebigen Rührvorrichtung realisiert werden.

Das Rührorgan ist mit einer insbesondere mit dem Messsensor verbundenen Messschaltung versehen, die eine Datenübertragungseinrichtung umfasst, um die Messdaten an eine nicht mit dem Rührorgan rotierende Empfangseinheit zu übertragen, wobei die Messdaten von der Datenübertragungseinrichtung an die Empfangseinheit übertragbar sind. Die Messdaten können in der Messschaltung verarbeitet und/oder digitalisiert werden. Vorzugsweise ist die Empfangseinheit Teil des Laborrührers und/oder in dem Laborrührer ortsfest, stationär oder gehäusefest angeordnet. Bevorzugt sind Energie und/oder Daten von einer Einkoppeleinrichtung, insbesondere der Empfangseinheit oder einer Einkoppeleinrichtung der Empfangseinheit, an die Messschaltung übertragbar. Grundsätzlich kann aber auch eine mit dem Rührorgan rotierende Energieversorgung für den Messsensor und/oder die Messschaltung vorgesehen sein.

Die Messdaten sind berührungslos oder kontaktlos von der Datenübertragungseinrichtung an die Empfangseinheit übertragbar. Alternativ können die Messdaten auch nicht berührungslos bzw. nicht kontaktlos übertragen werden, beispielsweise mittels eines Schleifrings oder Schleifkontakts. Insbesondere in diesem Fall ist keine Messschaltung, wie sie vorstehend erläutert ist, notwendig. Vorzugsweise ist auch die Energie und/oder sind auch die Daten berührungslos von der Einkoppeleinrichtung an die Messschaltung übertragbar. Durch die berührungslose Übertragung der Messdaten, der Energie und/oder der Daten können zu Verschleiß neigende Schleifringe oder Schleifkontakte vermieden werden, so dass eine zuverlässige und sichere Übertragung und ein in dieser Hinsicht wartungsfreier Betrieb möglich ist.

Bevorzugt umfasst das Rührwerk eine von einer Antriebseinheit rotierend antreibbare Halterung zum Halten des Rührorgans, insbesondere während des Rührens, wobei die Halterung zum auswechselbaren Halten des Rührorgans ausgebildet ist. Vorzugsweise ist die Antriebseinheit innerhalb eines Rührwerkgehäuses angeordnet.

Insbesondere ist der Laborrührer für die Verwendung mit Behältern im Labormaßstab angepasst. Bevorzugt ist der Laborrührer zum Rühren von Volumina von bis zu 2001, insbesondere bis zu 1001, insbesondere bis zu 501, insbesondere bis zu 251, insbesondere bis zu 101, insbesondere bis zu 51, insbesondere bis zu 31, insbesondere bis zu 1,51, geeignet oder vorgesehen. Insbesondere kann ein das zu rührende Medium aufnehmender Behälter ein Fassungsvermögen mit den genannten Volumina aufweisen.

Zur Realisierung der Erfindung ist grundsätzlich jeder Messsensor geeignet, der Messdaten einer Messgröße des Mediums direkt oder indirekt messen kann. Insbesondere kann das Rührorgan mit mehreren, insbesondere verschiedenartigen Messsensoren versehen sein. Bevorzugt ist der wenigstens eine Messsensor ein Temperatursensor zur Messung der Temperatur des Mediums oder der Temperaturverteilung innerhalb des Mediums. Die ermittelten Messdaten sind dann Temperaturdaten, die von dem Temperatursensor ermittelt werden. Im Laborbereich verwendete Temperatursensoren sind üblicherweise als Widerstandssensoren ausgebildet. Ein Schleifkontakt besitzt die Eigenschaft, der er - je nach Zustand und Abnutzungsgrad - variierende Widerstandswerte aufweist. Eine berührungslose Messdatenübertragung ist hinsichtlich der Messgenauigkeit des Sensors im Falle eines an dem Rührorgan vorgesehenen Temperatursensors daher besonders vorteilhaft.

Alternativ oder zusätzlich zu der Temperatur können aber auch eine oder mehrere andere Messgrößen des Mediums gemessen werden. Beispielsweise kann der Messsensor oder einer der Messsensoren einen Dehnungsmessstreifen umfassen, um das Drehmoment des Rührorgans zu ermitteln, über das insbesondere die Viskosität des Mediums gemessen werden kann. Die ermittelte Dehnung ist dabei eine Zwischengröße der Messgröße Viskosität des Mediums. Darüber hinaus sind weitere Sensortypen denkbar. Beispielsweise kann das Rührorgan mit einem Messsensor zur Messung der Leitfähigkeit des Mediums oder des pH-Werts des Mediums versehen sein, wobei bei der pH-Messung der jeweilige Messsensor von dem Medium berührt wird, insbesondere umflossen wird. Hierzu kann das Rührorgan, insbesondere im Bereich des Messsensors, Öffnungen wie z.B. Schlitze oder Bohrungen aufweisen.

Um einen besonders kompakten Laborrührer zu erhalten, können die Empfangseinheit und das Rührwerk in einem gemeinsamen Gehäuse angeordnet sein. Der Messsensor kann an dem zum Eintauchen in das zu rührende Medium vorgesehenen Ende des Rührorgans angeordnet sein.

Nach einer anderen Ausbildung der Erfindung umfasst das Rührorgan eine Rührwelle, wobei bevorzugt die Rührwelle als Hohlwelle ausgebildet ist, in deren Inneren der Messsensor angeordnet ist. Alternativ oder zusätzlich zu dem Messsensor kann auch die vorstehend genannte Messschaltung im Inneren der Hohlwelle angeordnet sein. Das Rührorgan kann zusätzlich ein Rührelement, insbesondere einen oder mehrere Rührflügel, umfassen, wobei bevorzugt das Rührelement auswechselbar an der Rührwelle befestigbar ist. Die Auswechselbarkeit oder Austauschbarkeit des Rührelements ermöglicht eine Anpassung des Laborrührers beispielsweise an die Rühraufgabe oder die Zähigkeit des Mediums.

Bevorzugt ist die Datenübertragungseinrichtung zur digitalen Übertragung der Messdaten ausgebildet. Wenn die Messdaten bereits in der Messschaltung digitalisiert werden, können die digitalen Daten in digitaler Form von der Datenübertragungseinrichtung an die Empfangseinheit übertragen werden. Auf diese Weise lässt sich eine robuste und wenig fehleranfällige Übertragung durchführen.

Zum Übertragen der Messdaten und/oder zum Empfangen der Energie und/oder der Daten kann die Messschaltung eine Spule umfassen. Bevorzugt ist die Spule an dem dem zum Eintauchen in das zu rührende Medium vorgesehenen Ende gegenüberliegenden Ende des Rührorgans vorgesehen. Ferner bevorzugt besteht das Rührorgan im Bereich der Spule aus einem nichtmagnetischen Material. Insbesondere in dem Fall, dass die Übertragung der Messdaten mittels Lastmodulation vorgesehen ist, kann die Spule mit einem magnetischen Feld zusammenwirken, das von der Empfangseinheit erzeugt wird. Das Rührorgan kann derart in eine Halterung zum Halten des Rührorgan einsteckbar sein, dass sein die Spule aufweisender Bereich, insbesondere sein die Spule aufweisendes Ende, in axialer Richtung über die Halterung hinausragt.

Zum Empfangen der Messdaten und/oder zum Übertragen der Energie und/oder der Daten kann die Empfangseinheit eine Spule zur Erzeugung eines Magnetfelds umfassen. Bevorzugt ist die Spule zur Erzeugung eines Wechselmagnetfeldes mit einer Speisestromelektronik verbunden, die einen Wechselstrom in die Spule einspeist. Die Verwendung eines Wechselmagnetfelds ermöglicht, dass die Energie und/oder die Daten auch dann an die Messschaltung übertragbar sind, wenn das Rührorgan und/oder die Messschaltung stillsteht, d.h. wenn keine Relativbewegung zwischen dem jeweiligen Übertrager oder Sender und dem jeweiligen Empfänger vorliegt.

Die Messdaten können induktiv, insbesondere mittels Lastmodulation, von der Datenübertragungseinrichtung an die Empfangseinheit übertragbar sein. Alternativ hierzu können die Messdaten aber auch optisch von der Datenübertragungseinrichtung an die Empfangseinheit übertragbar sein, wobei die Datenübertragungseinrichtung einen Lichtsender und die Empfangseinheit einen Lichtempfänger umfasst, der dem Lichtsender gegenüber angeordnet ist.

Die Energie und/oder die Daten können ebenfalls induktiv von der Einkoppeleinrichtung an die Messschaltung übertragbar sein. Wiederum alternativ hierzu können die Energie und/oder die Daten optisch von der Einkoppeleinrichtung an die Messschaltung übertragbar sein, wobei die Einkoppeleinrichtung einen Lichtsender und die Messschaltung einen Lichtempfänger umfasst, der dem Lichtsender gegenüber angeordnet ist.

Grundsätzlich können die Messdaten, die Energie und/oder die Daten jedoch auch kapazitiv, per Funk oder Infrarotstrahlung übertragen werden. Bevorzugt weisen zur kapazitiven Übertragung der jeweilige Sender und der jeweilige Empfänger jeweils eine Elektrode auf.

In einer bevorzugten Ausführungsform umfasst der Laborrührer eine Regeleinheit, in der die Messdaten der Messgröße zur Regelung der Messgröße und/oder anderer Prozessparameter verwendet werden. Ein Laborrührer mit einer Regeleinheit kann somit die Funktionen heute bekannter elektronischer Kontaktthermometer (EKT) zur Verfügung stellen. Insbesondere umfasst die Regeleinheit einen einfachen Soll-Ist-Vergleich. Sie kann beispielsweise als P-Regler oder als PID-Regler ausgebildet sein oder eine Fuzzy-Logik umfassen.

Insbesondere ist es bevorzugt, wenn die Regeleinheit ein Ausgangssignal erzeugt, das zur Regelung einer die Messgröße und/oder die anderen Prozessparameter beeinflussenden Einrichtung, bevorzugt einer externen Einrichtung, einer Temperiereinrichtung und/oder einer Dosiereinrichtung, verwendet wird, wobei das Ausgangssignal bevorzugt über eine Schnittstelle übertragen wird. Beispielsweise kann die gemessene Temperatur als Regelgröße dienen, um eine Temperiereinrichtung, die in dem Laborrührer integriert oder in einem externen Gerät vorhanden sein kann, zu regeln. Alternativ oder zusätzlich zu einer Temperiereinrichtung, beispielsweise einer Heizplatte (hot-plate), kann durch die Regeleinheit auch eine Dosiereinrichtung, beispielsweise eine Dosierpumpe zur Flüssigkeitsdosierung, geregelt werden. Andere Komponenten der Prozesskette können ebenfalls geregelt oder gesteuert werden. Das Ausgangssignal kann beispielsweise ein Schaltsignal sein, um die Einrichtung ein- und/oder auszuschalten. Das Ausgangssignal kann jedoch auch ein Stellsignal sein, insbesondere ein Proportionalsignal, um eine Stellgröße der Einrichtung zu verändern, insbesondere um einen proportionalen Faktor.

Bevorzugt sind die Messdaten der Messgröße über eine Schnittstelle des Laborrührers übertragbar.

Die Erfindung betrifft ferner eine Laboreinrichtung, mit einem Laborrührer, wie er vorstehend erläutert ist, und mit einem Behälter, insbesondere wie er vorstehend erläutert ist, zur Aufnahme des zu rührenden Mediums.

Die Erfindung betrifft ferner ein Verfahren zum Rühren eines Mediums und Messen von Messdaten einer Messgröße des Mediums, bei dem ein Laborrührer, wie er vorstehend erläutert ist, verwendet wird. Bevorzugt erfolgt das Rühren und Messen gleichzeitig.

Die Erfindung betrifft weiterhin die Verwendung eines von einem Rührwerk rotierend antreibbaren, zum Eintauchen in ein zu rührendes Medium vorgesehenen Rührorgans eines Laborrührers, insbesondere eines Überkopfrührers, zur Messung von Messdaten einer Messgröße des Mediums.

Die Erfindung wird nachfolgend anhand von in den Figuren dargestellten bevorzugten Ausführungsformen näher erläutert. Die darin dargestellten Besonderheiten können einzeln oder in Kombination verwendet werden, um bevorzugte Ausgestaltungen der Erfindung zu schaffen. Die beschriebenen Ausführungsformen stellen keine Einschränkung der Allgemeinheit des in den Ansprüchen definierten Gegenstandes dar. Es zeigen:
- Fig. 1a bis c: verschiedene Ausführungsformen des erfindungsgemä- ßen Laborrührers;
- Fig. 2: einen Schnitt durch eine Rührwelle des Laborrührers mit integrierter Messschaltung;
- Fig. 3: eine Detailzeichnung eines Endes der Rührwelle aus Figur 2;
- Fig. 4: ein Prinzipschnittbild der Rührwelle aus Figur 2 und einer Empfangseinheit; und
- Fig. 5a, b: prinzipielle Blockschaltbilder einer Messschaltung und der Empfangseinheit aus Figur 4.

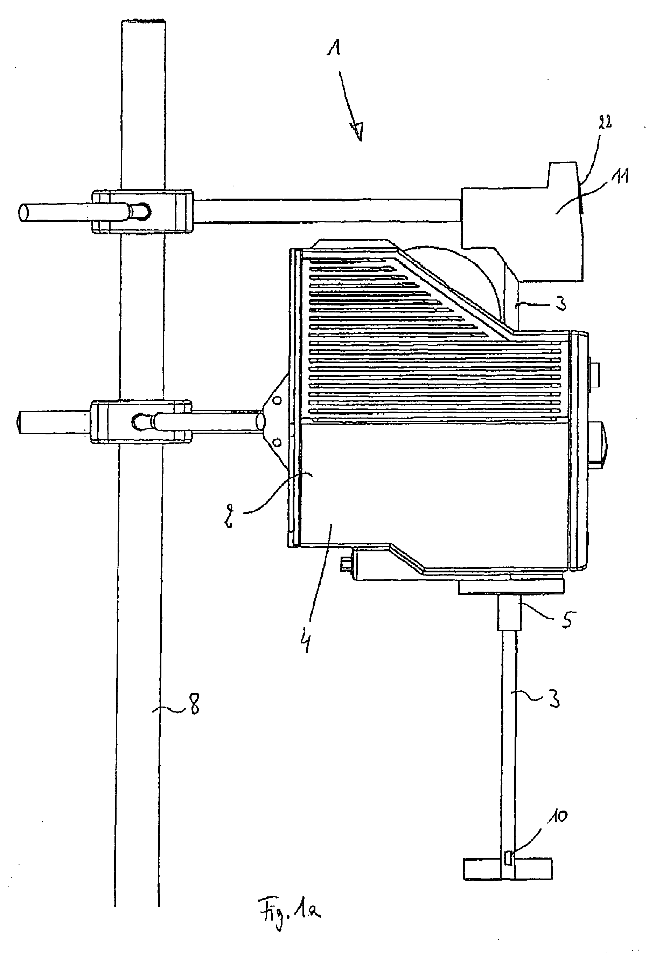

Die Figuren 1a bis 1c zeigen drei verschiedene Ausführungsformen eines erfindungsgemäßen Laborrührers 1, insbesondere eines Überkopfrührers, mit einem Rührwerk 2 und einer Rührwelle 3.

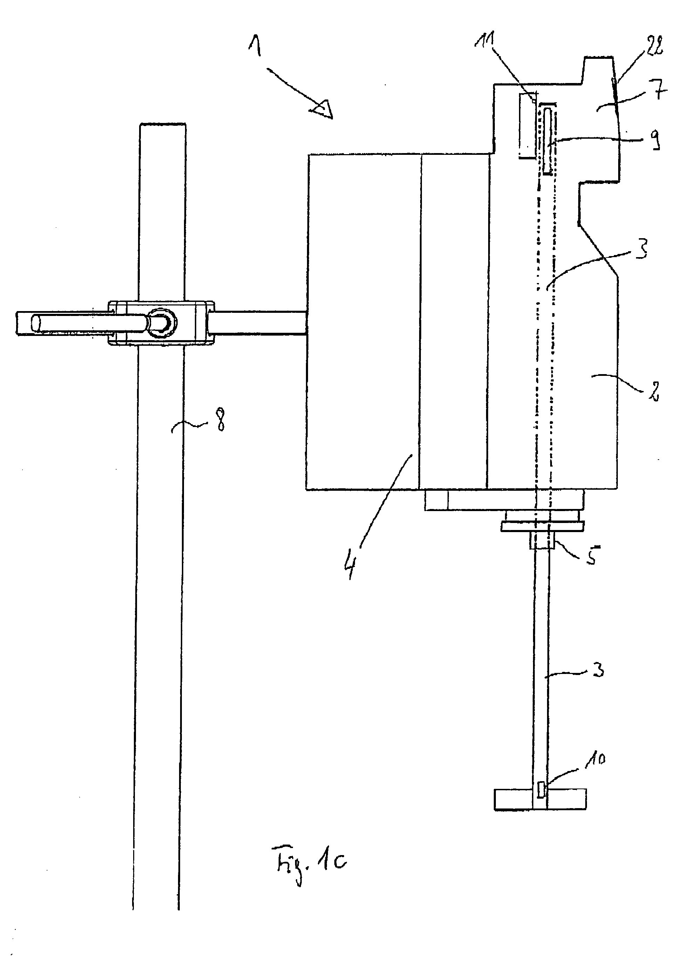

Das Rührwerk 2 ist derart ausgebildet, dass sich die Rührwelle 3 durch das Rührwerk 2 hindurch erstrecken kann. Die Rührwelle 3 umfasst einen Messsensor 10 und eine mit dem Messsensor 10 verbundene Messschaltung 9 (Figur 1c), wobei der Messsensor 10 und die Messschaltung 9 jeweils in die Rührwelle 3 integriert sind. Die von dem Messsensor 10 insbesondere während des Rührens eines Mediums gemessenen Messdaten werden in der Rührwelle 3 aufbereitet und an eine Empfangseinheit 11 des Laborrührers 1 übermittelt. Die Messdaten, andere auf den Messdaten basierende Daten und/oder weitere Informationen können an einer Anzeigeeinheit, z.B. einem Display 22, angezeigt werden.

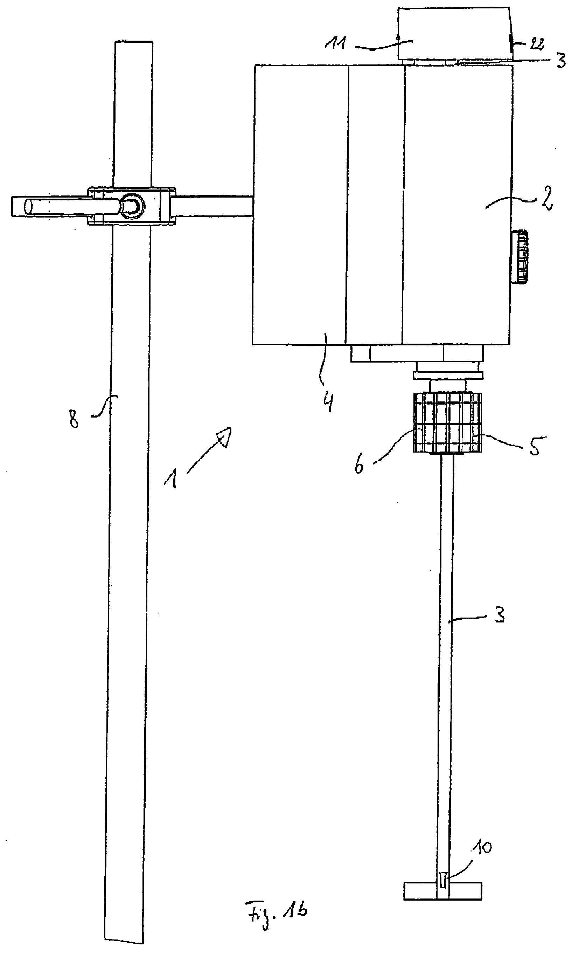

Das Rührwerk 2 umfasst ein Rührwerkgehäuse 4, in dem eine nicht dargestellte Antriebseinheit enthalten ist, die einen Motor umfasst. Die Antriebseinheit treibt eine rotierbare Halterung 5 an, die die Rührwelle 3 hält. Die Halterung 5 ist bevorzugt zum auswechselbaren Halten der Rührwelle 3 ausgebildet. Somit lässt sich die Rührwelle 3 einfach austauschen. Das Rührwerk 2 kann mit unterschiedlichen Rührwellen 3 betrieben werden. Die Halterung 5 in Figur 1b ist ein Schnellspannfutter 6, um ein komfortables und einfaches Austauschen der Rührwelle 3 ohne Werkzeug zu ermöglichen. Lediglich beispielsweise kann die Rührwelle 3 mit bis zu 2000 Umdrehungen/min rotieren.

Bei den in den Figuren 1a bis 1c beschriebenen Ausführungsformen des Laborrührers 1 ist der Messsensor 10 als Temperatursensor und die Empfangseinheit 11 zur Temperaturmessung ausgebildet. Lediglich beispielsweise können die Temperaturen des jeweiligen Mediums zwischen -30°C und etwa +220°C liegen. Die Empfangseinheit 11 kann selbstverständlich auch zur Auswertung und Verarbeitung anderer physikalischer Größen ausgebildet sein. Die Beschreibung anhand einer Temperaturmessung stellt keine Einschränkung der Erfindung dar.

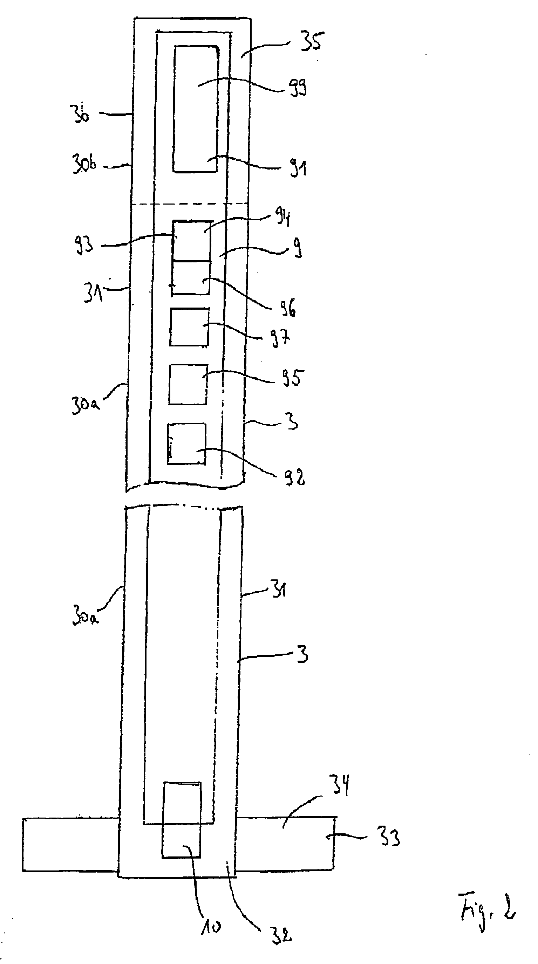

In Figur 1c ist dargestellt, dass die Rührwelle 3 die Messschaltung 9 und den Messsensor 10 umfasst, der in einem zu rührenden Medium die Temperatur misst. Der Messsensor 10 gibt seine Messdaten an die Messschaltung 9, die eine Datenübertragungseinrichtung 91 umfasst (Fig. 2), wobei in der Messschaltung 9 die Messdaten aufbereitet, verarbeitet, parallel/ seriell gewandelt, digitalisiert und/oder moduliert werden.

Die bevorzugt im oberen Ende 35 der Rührwelle 3 angeordnete Datenverarbeitungseinrichtung 91 überträgt die Messdaten des Messsensors 10 berührungslos an die Empfangseinheit 11. Die berührungslose Datenübertragung hat den Vorteil, dass sich Empfangseinheit 11 und Rührwelle 3 ohne gegenseitige Beeinflussung relativ zueinander bewegen können. Die Empfangseinheit 11 rotiert nicht mit der Rührwelle 3. Bevorzugt ist sie ortsfest. Sie kann jedoch auch beweglich sein, beispielsweise ebenfalls rotieren.

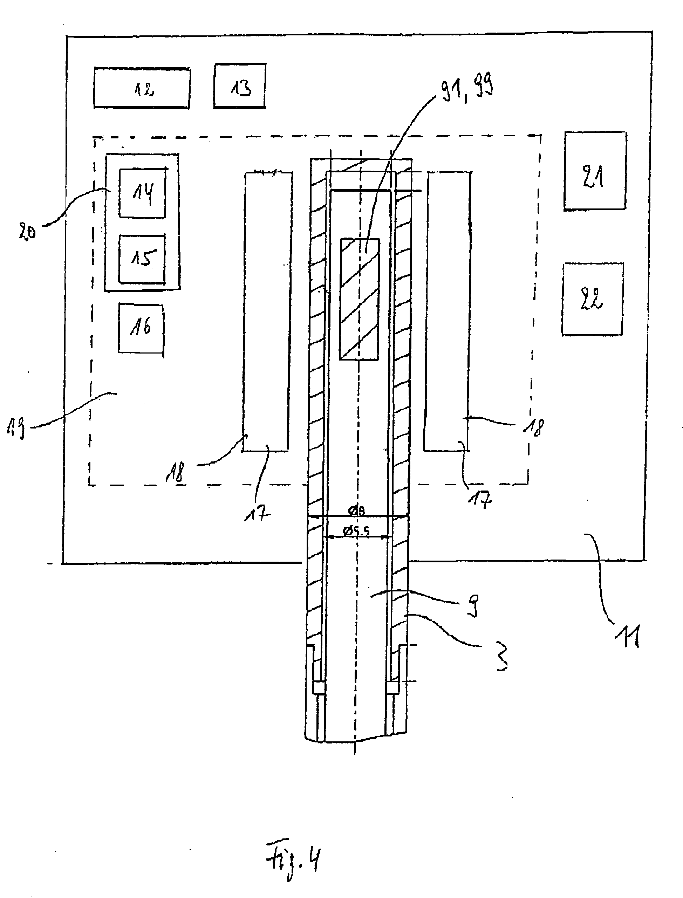

Die Empfangseinheit 11 dient nicht nur dem Empfang von Messdaten aus der Rührwelle 3, sondern auch zur Versorgung der Messschaltung 9 der Rührwelle 3 mit Energie. Des Weiteren kann die Empfangseinheit 11 eine Regeleinheit 21 einschließen (Fig. 4), die die von dem Messsensor 10 gemessenen und an die Empfangseinheit 11 übertragenen Messdaten der Messgröße des Mediums zur Regelung der Messgröße des Mediums und/oder anderer Prozessparameter verwendet. Beispielsweise kann bei der Messung der Viskosität des Mediums eine Dosiereinrichtung geregelt werden, mittels der beispielsweise eine Flüssigkeit zu dem zu rührenden Medium hinzugefügt wird.

Sowohl die Messdaten als auch das Ausgangssignal der Regeleinheit 21 oder weitere Informationen wie beispielsweise die Umdrehungsgeschwindigkeit oder ähnliches können über eine oder mehrere Schnittstellen an dem Laborrührer 1, insbesondere an dem Rührwerk 2, bevorzugt an der Empfangseinheit 11, abgegriffen werden. Bevorzugt ist nur eine Schnittstelle vorhanden, um alle interessierenden Daten und Signale abzugreifen. Eine drahtlose Übertragung ist ebenfalls denkbar.

In Figur 1a ist die Empfangseinheit 11 als separates Modul ausgebildet. Die Empfangseinheit 11 und das Rührwerk 2 sind an einem Stativ 8 befestigt und in ihrer Lage, insbesondere ihrer Höhe, einstellbar, so dass die Empfangseinheit 11 in Abhängigkeit von der Position und Größe der Rührwelle 3 relativ zum Rührwerk 2 angeordnet werden kann. So lässt sich eine einfache Anpassung an unterschiedliche Rührgefäße und zu rührende Flüssigkeitsmengen und Rührwellenlängen vornehmen.

Die separate Empfangseinheit 11 hat den Vorteil, dass bereits vorhandene Rührwerke 2 durch die Empfangseinheit 11 erweitert und Rührwellen 3 mit einem integrierten Temperatursensor 10 auch in herkömmlichen Rührwerken 2 verwendet werden können.

Die Ausführungsform nach Figur 1b zeigt eine Empfangseinheit 11, die auf das Rührwerkgehäuse 4 aufgesetzt ist. Bevorzugt sind das Rührwerk 2 und die Empfangseinheit 11 in einem gemeinsamen Gehäuse integriert. Figur 1c zeigt eine im Rührwerkgehäuse 4 integrierte Empfangseinheit 11. Hierdurch wird ein kompaktes Gerät gebildet, das für die Temperaturmessung während des Rührens mittels der Rührwelle ausgebildet ist.

In einer bevorzugten Ausführungsform ist der Sollwert, auf den die Regeleinheit 21 einregelt, einstellbar. Bevorzugt ist der Sollwert an der Regeleinheit 21 selbst oder an der Empfangseinheit 11 einstellbar. Dazu können entsprechende Schalter oder Taster (z.B. Druck-Drehregler) oder ein berührungssensitiver Bildschirm (Touch Screen) vorgesehen sein. Die Bedienelemente zur Einstellung des Sollwerts können in Bedieneinheiten des Laborrührers integriert sein, was beispielsweise bei einer Touch-Screen-Bedienung der Fall sein kann.

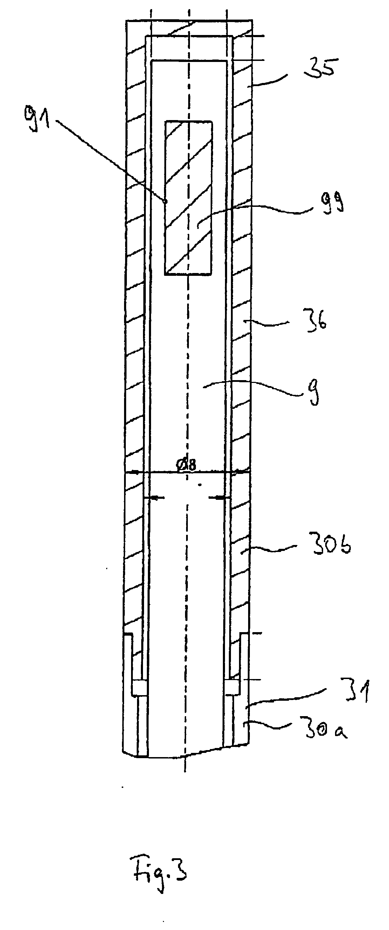

In den Figuren 2 und 3 ist die Rührwelle 3 im Detail gezeigt. Sie ist als Hohlwelle ausgebildet und weist beispielsweise einen Außendurchmesser von 8 bis 10 mm und einen Innendurchmesser von 4 bis 8 mm auf. Die Rührwelle 3 umfasst einen ersten Wellenabschnitt 30a und einen zweiten (kürzeren) Wellenabschnitt 30b. Bevorzugt ist der Wellenabschnitt 30a der Rührwelle 3 ein Edelstahlrohr 31, an dessen unterem Ende 32 (Fig. 2) ein Rührelement 33 vorgesehen ist, wobei das untere Ende 32 während des Rührens dem Rührwerk 2 abgewandt und in das zu rührende Medium getaucht ist. Optional kann das Rührelement 33 auswechselbar an der Rührwelle 3 befestigt sein, bevorzugt ist es in der Rührwelle 3 integriert. Das Rührelement 33 kann als Rührflügel 34 ausgebildet und mittels eines Sechskants oder einer Mutter befestigt sein, um in Abhängigkeit von dem zu rührenden Medium ausgewählt zu werden. Aus dem Stand der Technik bekannte Rührelemente 33 können so an der Rührwelle 3 befestigt werden. Denkbar ist auch, dass der Messsensor 10 in das Rührelement 33 integriert ist. Rührwelle 3 und Rührelement 33 stellen ein Rührorgan des Laborrührers dar.

An dem oberen Ende 35 der Rührwelle 3, das dem unteren Ende 32 gegenüberliegt, ist der Wellenabschnitt 30b angeordnet, der bevorzugt aus einem nichtmagnetischen und insbesondere magnetisch nichtabschirmenden Wellenstück 36 gebildet wird, das mit dem Edelstahlrohr 31 verbunden ist. Das Wellenstück 36 ist bevorzugt aus Glas, Keramik oder Kunstharz gebildet. Die Rührwelle 3 ist in dieser Ausführungsform für eine Energie- und/oder Datenübertragung mittels eines magnetischen Feldes geeignet.

Figur 3 ist zu entnehmen, dass der erste Wellenabschnitt 30a eine Nut aufweist und der zweite Wellenabschnitt 30b einen korrespondierenden Rücksprung, so dass die beiden Wellenabschnitte 30a, 30b nach dem Nut-Feder-Prinzip rotationsfest miteinander verbunden werden können. Die Verbindung der beiden Abschnitte 30a, 30b lässt keine Relativbewegung zwischen ihnen zu und ist derart dichtend, dass zumindest keine Flüssigkeit eintreten kann.

Im Inneren der Rührwelle 3 sind die Messschaltung 9 und der Messsensor 10 integriert. Die Messschaltung 9 ist auf einer sich axial erstreckenden Platine integriert, an deren Ende der Messsensor 10 angeordnet ist. Selbstverständlich muss der Sensor 10 nicht in der Platine integriert sein. Er kann auch als separates Bauteil ausgebildet sein, das mittels einer elektrischen Verbindung (Kabel) mit der Platine verbunden ist. In diesem Fall kann ein herkömmlicher Platinsensor eingesetzt werden, z.B. ein PT 1000-Fühler, um den bevorzugten Temperaturbereich zu erweitern.

Messdaten der zu messenden Temperatur des Mediums werden von dem Messsensor 10 an die Messschaltung 9 übergeben. Die Messschaltung 9 umfasst die Datenübertragungseinrichtung 91, die die Messdaten des Messsensors 10 an die Empfangseinheit 11 berührungslos überträgt, wie es in Figur 4 dargestellt ist.

Die Messschaltung 9 umfasst eine Messelektronik 92 (Fig. 2) zur Digitalisierung der Messsignale und Messdaten, ein als Spannungsregler ausgebildetes Netzteil 94, einen Mikroprozessor 95, eine Regelungsschaltung 96 und einen Modulator 97. Die Messelektronik 92 kann alternativ auch in dem Messsensor 10, beispielsweise in einem Temperatursensor, integriert sein.

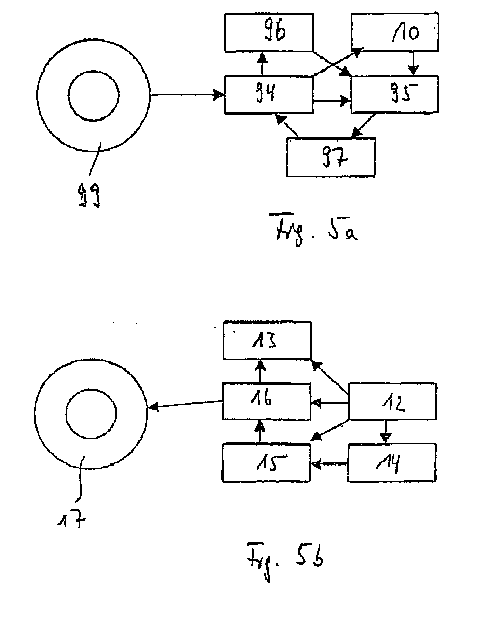

Die Regelungsschaltung 96 kann beispielsweise den Mikroprozessor 95 starten, sobald von dem Netzteil 94 eine ausreichende Spannungsversorgung der Messschaltung 9 zur Verfügung gestellt wird, wie dem Blockschaltbild nach Figur 5a zu entnehmen ist.

Die Empfangseinheit 11 umfasst eine Spannungsversorgung 12, einen Mikroprozessor 13, einen Generator 14, ein Leistungsteil 15 und einen Verstärker 16. Das Prinzipschaltbild der Empfangseinheit 11 ist in Figur 5b gezeigt. Die Empfangseinheit 11 weist auch einen als Spule 17 ausgebildeten Übertrager 18 auf, um Energie und Daten an die Rührwelle 3 zu übertragen bzw. Daten von der Rührwelle 3 zu empfangen. Die Spule 17 ist bevorzugt eine Zylinderspule, deren Zylinderachse sich axial zur Rührwelle 3 erstreckt, so dass die Rührwelle 3 innerhalb der Spule 17 rotiert, wobei zwischen der Spule 17 und der Welle 3 ein Spalt von wenigstens 1 mm, bevorzugt von wenigstens 3 mm und besonders bevorzugt von wenigstens 5 mm gebildet wird.

Da die Rührwelle 3 über keine eigene Energiequelle verfügt, muss sie von der Empfangseinheit 11 mit Energie versorgt werden. Bevorzugt findet die Übertragung zwischen Rührwelle 3 und Empfangseinheit 11 induktiv oder mittels eines magnetischen Feldes statt.

Die Rührwelle 3 weist an ihrem oberen Ende 35 eine Spule 99 auf. Besonders bevorzugt umfasst die Datenübertragungseinrichtung 91 die Spule 99. Die Rührwelle 3 besteht deshalb im Bereich der Spule 99 aus nichtmagnetischem Material, beispielsweise aus dem nichtmagnetischen Wellenstück 36. Die Spule 99 wirkt zur Übertragung von (elektrischer) Energie und/oder Daten mit einem magnetischen Feld zusammen, das von einer Einkoppeleinrichtung 19 der Empfangseinheit 11, insbesondere einer Magnetfeldquelle, erzeugt wird. Die Magnetfeldquelle 19 rotiert nicht mit der Rührwelle 3. Bevorzugt ist die Magnetfeldquelle 19 in der Empfangseinheit 11 integriert, wie in Figur 4 gezeigt. Beispielsweise wird die Magnetfeldquelle 19 von der Spule 17, dem Generator 14, dem Leistungsteil 15 und dem Verstärker 16 gebildet. Die Magnetfeldquelle ist in Figur 4 gestrichelt dargestellt.

In einer bevorzugten Ausführungsform sind die Magnetfeldquelle 19 und das Rührwerk 2 in einem gemeinsamen Gehäuse angeordnet. Wie in Figur 1c gezeigt, bildet das Rührwerkgehäuse 4 ein gemeinsames Gehäuse für das Rührwerk 2 und die Empfangseinheit 11, wobei die Empfangseinheit 11 die Magnetfeldquelle 19 umfasst.

Die Rührwelle 3 ist soweit in die rotierende Halterung 5 einsteckbar, dass ihr oberes Ende 35 in axialer Richtung über die Halterung 5 hinausragt und sich bevorzugt in das Rührwerkgehäuse 4 erstreckt, besonders bevorzugt bis in die Empfangseinheit 11.

Die berührungslose Energieübertragung zur Rührwelle 2 kann beispielsweise dadurch erfolgen, dass die Spule 99 der Rührwelle 3 in einem statischen Magnetfeld bewegt wird. Die Drehbewegung der Rührwelle 3 wird mittels der von einer Antriebseinheit angetriebenen Halterung 5 des Rührwerks 2 vorgenommen.

Eine Energieübertragung an die Rührwelle 3 findet bevorzugt induktiv, magnetisch, elektromagnetisch und/oder mit einem magnetischen Wechselfeld statt. Beispielsweise könnte in der Empfangseinheit 11 ein Permanentmagnet rotiert werden, so dass ein magnetisches Wechselfeld entsteht, wobei der Permanentmagnet und die Rührwelle 3 eine Relativbewegung ausführen.

Die Magnetfeldquelle 19 der Empfangseinheit 11 kann eine Spule zur (elektromagnetischen) Erzeugung eines Magnetfeldes einschließen. Die Spule ist in einer bevorzugten Ausführungsform mit der Spule 17 der Empfangseinheit 11 identisch.

In einer bevorzugten Ausführungsform wird die Spule 17 zur Erzeugung eines Wechselmagnetfeldes von einem Wechselstrom gespeist, der von einer Speisestromelektronik 20 erzeugt wird. Die Speisestromelektronik 20 kann beispielsweise aus dem Generator 14 und dem Leistungsteil 15 gebildet werden. Der in die Spule 17 eingespeiste Wechselstrom erzeugt ein magnetisches Wechselfeld, das in der Spule 99 der Rührwelle 3 eine Spannung induziert. Vorteilhaft bei dieser Ausführungsform ist, dass die Rührwelle 3 auch im Stillstand oder bei geringen Umdrehungszahlen mit Energie versorgt werden kann. Sobald genügend Energie in die Rührwelle 3 übertragen worden ist, beginnt der Messsensor 10 die Temperatur zu messen. Gleichzeitig startet die Regelungsschaltung 96 den Mikroprozessor 95, so dass auch eine Verarbeitung der Messdaten und/oder eine Übertragung der Messdaten an die Empfangseinheit 11 stattfinden kann.

Alternativ zur induktiven, elektromagnetischen und/oder magnetischen Energieübertragung könnte die Energieübertragung zur Rührwelle 3 optoelektronisch, beispielsweise mittels LEDs, erfolgen.

Die Übertragung der Messdaten, insbesondere der Temperaturdaten, von der Rührwelle 3 zu der Empfangseinheit 11 kann ebenfalls optoelektronisch stattfinden, beispielsweise durch Verwendung von Licht oder durch nicht sichtbare Lichtquellen, z.B. mittels LEDs. Bevorzugt kann beispielsweise die Datenübertragungseinrichtung 91 der Rührwelle 3 einen Lichtsender, beispielsweise einen Halbleiter-Lichtsender umfassen. Dieser Lichtsender kann bevorzugt an der einsteckseitigen Stirnfläche der Rührwelle 3, also an der Stirnfläche am oberen Ende 35, angeordnet sein. Bei dieser Ausführungsform kann die Empfangseinheit 11 einen Lichtempfänger umfassen, der dem Lichtsender der Rührwelle 3 derart gegenüber angeordnet ist, dass eine optische Übertragung zwischen dem Lichtsender und dem Lichtempfänger stattfinden kann.

Bevorzugt findet die Datenübertragung zwischen der Rührwelle 3 und der Empfangseinheit 11 ebenfalls induktiv, magnetisch und/oder elektromagnetisch statt. Beispielsweise kann von der Spule 99 der Rührwelle 3 ein magnetisches Feld erzeugt werden, das in der Empfangseinheit 11 empfangen wird, und deren Signal ausgewertet wird. Hierzu ist jedoch eine eigenständige Energieversorgung in der Rührwelle 3 notwendig.

In einer bevorzugten Ausführungsform arbeitet die Messschaltung 9 der Rührwelle 3 als Transponder, insbesondere als sogenannter passiver RFID-Transponder (Radio Frequency Identification-Transponder). Das von der Magnetquelle 19 erzeugte (elektro-)magnetische Wechselfeld induziert eine Spannung in der Spule 99, so dass der zugehörige Induktionsstrom die Messschaltung 9 mit Energie versorgt. Der Mikroprozessor 95 der Messschaltung 9 erzeugt ein Nutzsignal, das den gemessenen (digitalisierten) Messdaten des Temperatursensors 9 entspricht. Dabei wird in Abhängigkeit der Messdaten Energie in der Messschaltung 9 verbraucht, die in der Empfangseinheit 11 detektiert wird. Die Änderung des Energieverbrauchs kann beispielsweise durch Kurzschließen der Spule 99 erfolgen. Da die Messschaltung 9 keine eigene Energiequelle aufweist, erzeugt sie selbst kein Magnetfeld, um Messwerte aktiv an die Empfangseinheit 11 zu übertragen.

Die Messschaltung 9 umfasst deshalb den Modulator 97, der von dem Mikroprozessor 95 gesteuert wird. Der Modulator 97 wird in Abhängigkeit von dem mit dem Messsensor 10 gemessenen Messsignalen gesteuert.

Die Messdaten können z.B. als moduliertes Signal an die Empfangseinheit 11 übermittelt werden, wobei die (digitalisierten) Messdaten als Nutzsignal dem von der Empfangseinheit 11 erzeugten Trägersignal überlagert werden.

Durch den Modulator 97 wird festgelegt, wieviel Energie durch die Spule 99 dem von der Magnetfeldquelle 19 erzeugten magnetischen Wechselfeld entnommen wird. Dazu wird ein den (digitalisierten) Messdaten proportionales (Nutz-)Signal erzeugt. Dieses Nutzsignal wird dem unmodulierten (Träger-)Signal des magnetischen Wechselfeldes der Magnetfeldquelle 19 überlagert. Die von der Messschaltung 9 entnommene Energiemenge und deren Änderung wirken auf die Magnetfeldquelle 19 zurück. Die Rückwirkung wird von der Empfangseinheit 11 registriert. Sie kann aus der durch die Energieentnahme hervorgerufenen Änderung des Wechselfeldes bzw. der Rückwirkung auf die Magnetfeldquelle 19 das modulierte Messsignal decodieren und auf die aufmodulierten Messwerte rückschließen.

Die Messdaten können also insbesondere mittels Lastmodulation übertragen werden, d.h. befindet sich die Spule 99 der als Transponder wirkenden Messschaltung 9 im Nahfeld der Spule 17 der als Lesegerät wirkenden Empfangseinheit 11, entzieht die Messschaltung 9 dem von der Spule 17 generierten magnetischen Feld Energie, wodurch eine Spannungsänderung in der als Leseantenne wirkenden Spule 17 hervorgerufen wird, so dass durch eine Modulation des durch die Spule 99 fließenden Stroms bzw. der Impedanz der Messschaltung 9 die Übertragung der Messdaten von der Messschaltung 9 an die Empfangseinheit 11 möglich ist.

Durch die induktive Kopplung zwischen der Magnetfeldquelle 19 bzw. der Empfangseinheit 11 und der Messschaltung 9 mit der Spule 99 im elektromagnetischen Nahfeld ist der Abstand zwischen Rührwelle 3 und Empfangseinheit 11 begrenzt. Da sich die Rührwelle 3 jedoch in die Empfangseinheit 11 erstreckt, spielt diese Entfernung keine Rolle. Aufgrund der verwendeten Transponder-Technik könnte sowohl die Magnetfeldquelle 19 als auch die Empfangseinheit 11 einige Zentimeter von der Rührwelle 3 entfernt sein. Allerdings würde die Energie und Datenübertragung ein höheres magnetisches Feld erfordern.

Die Verwendung eines elektromagnetischen Wechselfeldes oder eines magnetischen Wechselfeldes, aber auch die Verwendung eines RFID-Transponders weisen den Vorteil auf, dass eine Übertragung von Daten und/oder Energie auch bei stehender Rührwelle 3 stattfinden kann. Die Rührwelle kann sich folglich für ihren Betrieb und insbesondere zur Ermittlung und Übertragung der Messdaten in Ruhe befinden. Selbstverständlich kann sie auch rotieren. Die Position, Lage oder Umdrehungsgeschwindigkeit der Rührwelle 3 hat keinen Einfluss auf die Messung oder Übertragung der Messdaten an die Empfangseinheit 11.

### Bezugszeichenliste

- 1: Laborrührer
- 2: Rührwerk
- 3: Rührwelle
- 4: Gehäuse
- 5: Halterung
- 6: Schnellspannfutter
- 8: Stativ
- 9: Messschaltung
- 10: Messsensor
- 11: Empfangseinheit
- 12: Spannungsversorgung
- 13: Mikroprozessor
- 14: Generator
- 15: Leistungsteil
- 16: Verstärker
- 17: Spule
- 18: Übertrager
- 19: Einkoppeleinrichtung
- 20: Speisestromelektronik
- 21: Regeleinheit
- 22: Display
- 30a: erster Wellenabschnitt
- 30b: zweiter Wellenabschnitt
- 31: Edelstahlrohr
- 32: unteres Ende der Rührwelle
- 33: Rührelement
- 34: Rührflügel
- 35: oberes Ende der Rührwelle
- 36: Wellenstück
- 91: Datenübertragungseinrichtung
- 92: Messelektronik
- 94: Netzteil
- 95: Mikroprozessor
- 96: Regelungsschaltung
- 97: Modulator
- 99: Spule

## Patentansprüche

1. Laborrührer, insbesondere Überkopfrührer, mit einem Rührwerk (2) und mit einem von dem Rührwerk (2) rotierend antreibbaren, zum Eintauchen in ein zu rührendes Medium vorgesehenen Rührorgan (3, 33),
**dadurch gekennzeichnet,**
**dass** das Rührorgan (3, 33) mit wenigstens einem Messsensor (10) zur Messung von Messdaten einer Messgröße des Mediums versehen ist, wobei das Rührorgan (3, 33) mit einer Messschaltung (9) versehen ist, die eine Datenübertragungseinrichtung (91) umfasst, um die Messdaten berührungslos an eine nicht mit dem Rührorgan (3, 33) rotierende Empfangseinheit (11) zu übertragen.

2. Laborrührer nach Anspruch 1,
**dadurch gekennzeichnet,**
**dass** Energie und/oder Daten, vorzugsweise berührungslos, von einer Einkoppeleinrichtung (19), insbesondere der Empfangseinheit (11), an die Messschaltung (9) übertragbar sind.

3. Laborrührer nach Anspruch 1 oder 2,
**dadurch gekennzeichnet,**
**dass** das Rührwerk (2) eine von einer Antriebseinheit rotierend antreibbare Halterung (5) zum Halten des Rührorgans (3, 33), insbesondere während des Rührens, umfasst, wobei die Halterung (5) zum auswechselbaren Halten des Rührorgans (3, 33) ausgebildet ist.

4. Laborrührer nach einem der vorhergehenden Ansprüche,
**dadurch gekennzeichnet,**
**dass** der Messsensor (10) ein Temperatursensor ist und die Messdaten Temperaturdaten sind.

5. Laborrührer nach einem der vorhergehenden Ansprüche,
**dadurch gekennzeichnet,**
**dass** das Rührorgan (3, 33) eine Rührwelle (3) umfasst, wobei bevorzugt die Rührwelle (3) als Hohlwelle ausgebildet ist, in deren Inneren der Messsensor (10) angeordnet ist, und/oder dass das Rührorgan (3, 33) zusätzlich ein Rührelement (33), insbesondere einen oder mehrere Rührflügel (34), umfasst, wobei bevorzugt das Rührelement (33) auswechselbar an der Rührwelle (3) befestigbar ist.

6. Laborrührer nach einem der vorhergehenden Ansprüche,
**dadurch gekennzeichnet,**
**dass** die Datenübertragungseinrichtung (91) zur digitalen Übertragung der Messdaten ausgebildet ist.

7. Laborrührer nach einem der vorhergehenden Ansprüche,
**dadurch gekennzeichnet,**
**dass** die Messschaltung (9) eine Spule (99) umfasst, die bevorzugt an dem dem zum Eintauchen in das zu rührende Medium vorgesehenen Ende (32) gegenüberliegenden Ende (35) des Rührorgans (3, 33) vorgesehen ist, und die insbesondere mit einem magnetischen Feld zusammenwirkt, das von der Empfangseinheit (11) erzeugt wird.

8. Laborrührer nach einem der vorhergehenden Ansprüche,
**dadurch gekennzeichnet,**
**dass** die Empfangseinheit (11) eine Spule (17) zur Erzeugung eines Magnetfelds umfasst, wobei bevorzugt die Spule (17) zur Erzeugung eines Wechselmagnetfeldes mit einer Speisestromelektronik (20) verbunden ist, die einen Wechselstrom in die Spule (17) einspeist.

9. Laborrührer nach einem der vorhergehenden Ansprüche,
**dadurch gekennzeichnet,**
**dass** die Messdaten induktiv von der Datenübertragungseinrichtung (91) an die Empfangseinheit (11) übertragbar sind, wobei bevorzugt die Messdaten mittels Lastmodulation von der Datenübertragungseinrichtung (91) an die Empfangseinheit (11) übertragbar sind.

10. Laborrührer nach einem der vorhergehenden Ansprüche,
**dadurch gekennzeichnet,**
**dass** die Messdaten optisch von der Datenübertragungseinrichtung (91) an die Empfangseinheit (11) übertragbar sind, wobei die Datenübertragungseinrichtung (91) einen Lichtsender und die Empfangseinheit (11) einen Lichtempfänger umfasst, der dem Lichtsender gegenüber angeordnet ist.

11. Laborrührer nach einem der Ansprüche 2 bis 10,
**dadurch gekennzeichnet,**
**dass** die Energie und/oder die Daten induktiv von der Einkoppeleinrichtung (19) an die Messschaltung (9) übertragbar sind.

12. Laborrührer nach einem der Ansprüche 2 bis 10,
**dadurch gekennzeichnet,**
**dass** die Energie und/oder die Daten optisch von der Einkoppeleinrichtung (19) an die Messschaltung (9) übertragbar sind, wobei die Einkoppeleinrichtung (19) einen Lichtsender und die Messschaltung (9) einen Lichtempfänger umfasst, der dem Lichtsender gegenüber angeordnet ist.

13. Laborrührer nach einem der vorhergehenden Ansprüche,
**dadurch gekennzeichnet,**
**dass** der Laborrührer (1) eine Regeleinheit (21) umfasst, in der die Messdaten der Messgröße zur Regelung der Messgröße und/oder anderer Prozessparameter verwendet werden.

14. Laboreinrichtung, mit einem Laborrührer (1) nach einem der vorhergehenden Ansprüche und mit einem Behälter zur Aufnahme des zu rührenden Mediums.

15. Verfahren zum Rühren eines Mediums und Messen von Messdaten einer Messgröße des Mediums, bei dem ein Laborrührer (1) nach einem der vorhergehenden Ansprüche verwendet wird, wobei insbesondere das Rühren und Messen gleichzeitig erfolgt.
